# EUROPEAN PATENT APPLICATION

(11) **EP 4 494 915 A1**
(43) Date of publication of application: **22.01.2025**
(21) Application number: 24187286.0
(22) Date of filing: 09.07.2024
(51) Int. Cl.: B60L 50/64, B60L 53/20, B60L 53/80, B60L 58/12, B60L 58/20, H02J 7/34

(54) **A METHOD OF INCREASING THE RANGE OF ELECTRIC VEHICLES AND AN ELECTRIC VEHICLE ADAPTED TO PERFORM THIS METHOD**

(30) Priority: 13.07.2023 CZ 20230268
(71) Applicant: Autocentrum BLOHMANN spol.s r.o., 33901 Klatovy (CZ)
(72) Inventor: Blohmann, Miroslav, 33401 Vreskovice (CZ); Blohmann, Tomas, 33401 Vreskovice (CZ)
(74) Representative: Sedlák, Jirí

(57) **Abstract**

The method for increasing the range of an electric vehicle powered by a stationary traction battery (1) wherein at least one portable rechargeable battery (2) is inserted into the electric vehicle before driving. The stationary traction battery (1) is then charged from the portable rechargeable battery (2) while driving by means of the DC/DC charger (7), or current is drawn from the portable rechargeable battery (2) to directly supply the electric vehicle with electrical energy. This arrangement serves to optimize the drawing of electrical energy from batteries (1, 2), for their slower wear and to compensate for fluctuations during drawing. The DC/DC charger (7) thus regulates the charging power in time for recharging the stationary traction battery (1) from the portable rechargeable battery (2), depending on the current capacity of the stationary traction battery (1) and the current driving mode of the electric vehicle. The electric vehicle created according to this method consists of at least one portable rechargeable battery (2) and a DC/DC charger (7) to which a portable rechargeable battery (2) of safe voltage and a stationary traction battery (1) are connected. The DC/DC charger (7) is connected to the battery control, communication and security unit (3) and is equipped with or connected to a device for instantaneous regulation of the charging power for recharging the stationary traction battery (1) from the portable rechargeable battery (2) while the electric vehicle is driving, depending on the current state of charge of the stationary traction battery (1) and on the current power drawn from the stationary traction battery (1) while driving.

## Description

### Field of the Invention

The invention relates to a method of increasing the range of electric vehicles and an electric vehicle adapted to perform this method, i.e. the field of production of electric vehicles, transport and construction of transport vehicles.

### Background of the Invention

Trends in modern transport include electric vehicles and other transport or handling equipment using a battery pack to supply power to their drive units. An electric vehicle is a motor vehicle driven by an electric motor. Common electric vehicles use batteries to store energy. The battery is a rechargeable source that can be charged in a charging station or from a standard electrical outlet in buildings, garages and parking lots. The range of the electric vehicle depends entirely on the capacity of the battery, i.e. how many kilometres the vehicle can travel with a single battery charge. The range is one of the major restrictive criteria for slower development and mass deployment of this emission-free drive. Even if the capacity of batteries is gradually increasing, this capacity still cannot provide the necessary range corresponding to the range of vehicles with an internal combustion engine.

In rechargeable batteries, both the chemical energy of the electrolyte and the electrodes is converted into electrical energy, and the opposite process occurs when the battery is recharged. The discharge reaction also occurs to a lesser extent outside of energy consumption. The charging and discharging efficiency is very high, approximately 80 to 90%.

Thus the biggest problem for an electric vehicle is how big battery, and thus the weight, the vehicle will carry. In general, the larger the battery block, the greater its capacity, it is also heavier, but at the same time it can store and subsequently release a greater amount of electrical energy. This is closely related to the fact that the price of the rechargeable battery is currently very high and forms a significant part of the selling price of the vehicle.

The choice of a suitable block is then a mathematical function between variables such as the weight of the vehicle, the size of the vehicle, the required engine power, the required energy, i.e. the battery capacity, and the resulting price. The result is the vehicle's range on a single charge before the battery block needs to be recharged for the next drive.

The rechargeable battery system of a classic electric vehicle according to the background of the invention usually consists of at least one stationary traction battery, sensor devices for sensing the state of the stationary traction battery and sensing information about the current flows of electrical energy in the electrical system of the electric vehicle. In addition, the system consists of an external connection for recharging the stationary traction battery, an electrical system for the distribution of electrical energy in the electric vehicle and a battery control, communication and security unit for controlling and evaluating electrical processes in the electric vehicle. This unit is connected to the electrical system and the central control unit of the electric vehicle.

The stationary traction battery is electrically connected to a DC/DC charger or an on-board charger, which is a slow charging charger. These are data and electrically connected to the battery control, communication and security unit for monitoring the electric flows detected by the sensors in the electric vehicle, the performance parameters of the stationary traction battery of the electric vehicle and the sensing of the security parameters of the stationary traction battery. The battery control, communication and security unit is data and electrically connected to the communication interface of the central control unit of the electric vehicle.

A technology is known from the background of the invention where the stationary traction battery is designed as replaceable, but the problem is that replacing this traction battery is time-consuming and requires good workshop equipment. Since traction batteries are not the same for all types of vehicles, replacement sites must hold large stocks of a large number of batteries of different types, sizes and capacities. There is also a need for special equipment, i.e. a special replacement station, which is expensive and demanding in terms of space, automation, operation and maintenance. The price of such a station is in the order of millions of Czech crowns. At the same time, there is also a problem with ownership or transfer of ownership between the current user, the previous user and the actual owner of the battery.

Possible solution for the improvement of the range of electric vehicles is to have a large network of charging stations and charging ports and to shorten the recharge rate as much as possible. However, fast recharging of vehicles is demanding on the power input of the charging points, and at the same time the vehicle must be stopped during the charging period. The recharge rate is also directly affected by the size of the battery. Generally, the larger the battery is, the more power it can be recharged. However, fast recharging degrades the battery faster. At the same time, higher losses occur during faster recharging.

Document WO2017206479 discloses the existence of connected battery systems. However, the document deals with the connection of two battery systems outside of the vehicle operation process. The connection thus serves to recharge the stationary traction battery, but as a substitute for a stationary charging station, i.e. not to increase the range, but to increase the comfort of charging.

The object of the invention is to define a method for increasing the range, i.e. the range of electric vehicles, regardless of the type, size and power of their stationary traction battery. Furthermore, the object is to create an electric vehicle adapted to perform this method. The goal is therefore to increase the range of the electric vehicle otherwise than by increasing the capacity, i.e. the size of the stationary traction battery block, i.e. the traction battery of the vehicle.

### Summary of the Invention

The shortcomings of the currently known methods for increasing the range of an electric vehicle powered by a stationary traction battery are overcome by this invention. According to this invention, the stationary traction battery is supplied with power from another source of electrical energy, which is at least one portable rechargeable battery, during discharge, i.e. while driving the electric vehicle. The portable rechargeable battery is thus inserted into the electric vehicle before driving and is connected to the stationary traction battery as an additional but replaceable source.

The layout of the electric vehicle is based on the previous method for increasing the range of the electric vehicle powered by stationary traction battery. The electric vehicle consists of at least one stationary traction battery, an electrical system for the distribution of electrical energy in the electric vehicle, which is connected to the stationary traction battery, sensor devices for sensing the state of the stationary traction battery and information about the current flows of electrical energy in the electrical system of the electric vehicle connected to the battery control communication and security unit. Furthermore, the electric vehicle includes a central control unit, which is data and electrically connected to the battery control communication and security unit. In addition, the electric vehicle consists of at least one portable rechargeable battery and a DC/DC charger to which a portable rechargeable battery of safe voltage and a stationary traction battery are connected. The DC/DC charger is connected to the battery control, communication and security unit and is equipped with or connected to a device for instantaneous regulation of the charging power for recharging the stationary traction battery from the portable rechargeable battery while driving the electric vehicle. This recharging process takes place depending on the current state of charge of the stationary traction battery and on the current power drawn from the stationary traction battery while driving.

In a preferred embodiment, the portable rechargeable battery is placed in the travel or storage space of the electric vehicle in a removable way, depending on where it takes up less space and where there is free space for it.

In another preferred embodiment, the portable rechargeable battery consists of at least two separate battery modules, which are adapted for interconnection into one compact unit. For this interconnection, the separate battery modules are electrically interconnected by means of a connecting device. According to one of the preferred embodiments, such connecting device can be a connector bus bar.

In another preferred embodiment, the connector bus bar is equipped with a device for acoustic and/or visual indication of the discharge of the portable rechargeable battery.

In another preferred embodiment, the portable rechargeable battery is provided with a handle for transport. The size of the portable rechargeable battery thus enables transport using human strength, which corresponds to its weight.

In the following preferred embodiment, the portable rechargeable battery is provided with an external charging connector for connecting the portable rechargeable battery to an external power source.

In another preferred embodiment, the electric vehicle is equipped with a holder in the travel or storage space for fixing the position of at least one portable rechargeable battery while driving. According to another preferred embodiment, the holder is mounted in a removable way to enable at the same time easy insertion and removal of the portable rechargeable battery in the electric vehicle. A significant advantage is that the holder is thus another preferred embodiment, i.e. a device that is mounted in the electric vehicle only when it is decided to use the portable rechargeable battery, while it can then be removed from the electric vehicle. If you do not plan to use the portable rechargeable battery, the holder does neither need to be mounted in the electric vehicle, nor will take up space in the electric vehicle.

The main advantage of this invention is that the created method of range of electric vehicles and the electric vehicle adapted to perform this method, enables an increase in the range of the electric vehicle, i.e. the distance before the electric vehicle has to stop and recharge or replace the stationary traction battery. The present invention allows to increase the greater range of the electric vehicle without stopping, regardless of the type, size and capacity of the stationary traction battery of the electric vehicle. The created solution is simple and, due to the elimination of the need for fast charging, this method does not require high power for charging portable rechargeable batteries. Portable rechargeable batteries can be handled by a person without the need for handling and lifting devices, working at safe voltage and do not require much space, mechanization and operator for replacement. The proposed patent solution is universal and its technology is applicable across the entire spectrum of produced electric vehicles. In addition, the placement of the portable rechargeable battery does not require invasive intervention in the structure and electrical equipment of the electric vehicle, and interventions are fully reversible. The present invention divides the drawn current into a part drawn from the stationary traction battery and a part drawn from the portable rechargeable battery, thereby achieving slower wear of all batteries placed in the electric vehicle due to their operation in ideal mode. Thanks to the invention, it is also possible to reduce the peak current drawn from the stationary traction battery, thereby achieving slower wear and longer service life of this stationary traction battery.

The use of portable rechargeable batteries makes it possible to reach an infinite range, with only short stops necessary at most to replace the portable rechargeable battery.

### Explanation of drawings

The invention will be explained in detail by drawings which illustrate:
- Fig. 1: simple wiring diagram of the battery system of an electric vehicle with a pair of portable rechargeable batteries,
- Fig. 2: illustration of a portable rechargeable battery with an external charging connector for connection to a connector bus bar,
- Fig. 3: illustration of a portable rechargeable battery with a different design of an external charging connector for connection to a connector bus bar,
- Fig. 4: schematic illustration of an electric vehicle design adapted to connect portable rechargeable batteries without these batteries, which are outside the electric vehicle when removed,
- Fig. 5: schematic illustration of an electric vehicle design adapted to connect portable rechargeable batteries with a pair of these batteries.

### Examples of the invention embodiments

The proposed method for increasing the range of an electric vehicle is based on a model electric vehicle equipped with and powered by a stationary traction battery 1 additionally equipped with at least one portable rechargeable battery 2 of safe voltage. The stationary traction battery 1 is then charged from the portable rechargeable battery 2 while driving by means of the DC/DC charger 7, or current is drawn from the portable rechargeable battery 2 to directly supply the electric vehicle with electrical energy, to optimize the drawing of electrical energy from batteries 1, 2, for their slower wear and to compensate for fluctuations during drawing. The DC/DC charger 7 thus regulates the charging power in time for recharging the stationary traction battery 1 from the portable rechargeable battery 2, depending on the current capacity of the stationary traction battery 1 and the current driving mode of the electric vehicle.

The layout of the electric vehicle is based on the previous method for increasing the range of the electric vehicle powered by stationary traction battery. The electric vehicle consists of at least one stationary traction battery 1, an electrical system for the distribution of electrical energy in the electric vehicle, which is connected to the stationary traction battery 1. In addition, the electric vehicle consists of sensor devices for sensing the state of the stationary traction battery 1 and information about the current flows of electrical energy in the electrical system of the electric vehicle connected to the battery control communication and security unit 3. Furthermore, the electric vehicle includes a central control unit 4, which is data and electrically connected to the battery control communication and security unit. In addition, the electric vehicle consists of at least one portable rechargeable battery 2 and a DC/DC charger 7 to which a portable rechargeable battery of safe voltage and a stationary traction battery 1 are connected. The DC/DC charger 7 is connected to the battery control, communication and security unit 3 and is equipped with or connected to a device for instantaneous regulation of the charging power for recharging the stationary traction battery from the portable rechargeable battery while driving the electric vehicle. This recharging process takes place depending on the current state of charge of the stationary traction battery 1 and on the current power drawn from the stationary traction battery 1 while driving. The current is drawn from the portable rechargeable battery 2 to directly supply the electric vehicle with electrical energy, to optimize the drawing of electrical energy from batteries 1, 2, for their slower wear and to compensate for fluctuations during drawing.

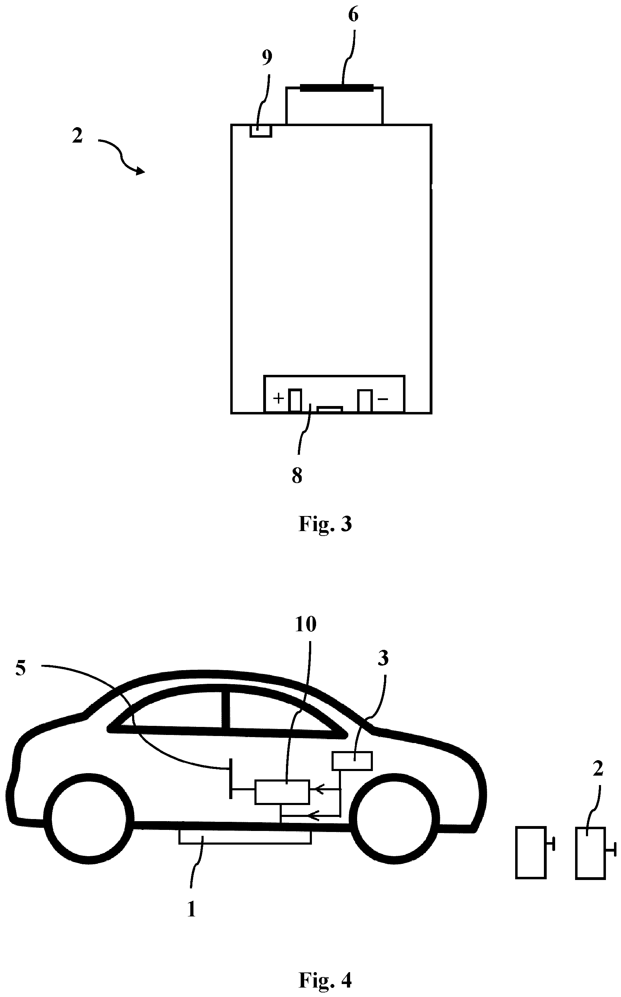

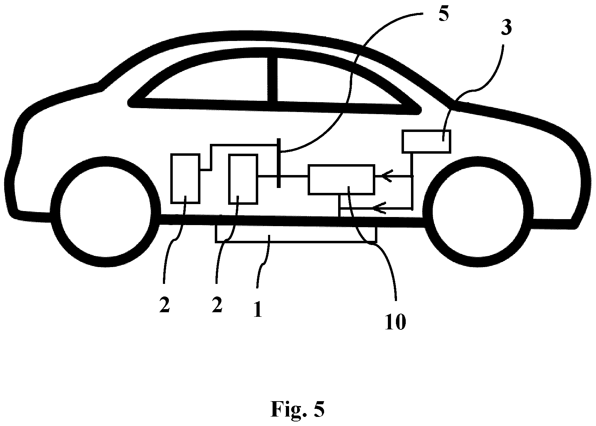

According to the example of the invention embodiment, shown in Fig. 4 and 5, the portable rechargeable battery 2 is placed in the travel or storage space of the electric vehicle in a removable way. The location of the portable rechargeable battery 2 can be chosen depending on where it takes up less space and where there is free space for it. This much depends on the type and size of the electric vehicle.

According to a non-illustrated embodiment of the invention, the portable rechargeable battery 2 consists of at least two separate battery modules, which are adapted for interconnection into one compact unit. For this interconnection, the separate battery modules are electrically interconnected by means of a connecting device. According to one of the non-illustrated embodiments of the invention, such connecting device can be a connector bus bar 5.

According to another non-illustrated embodiment of the invention, the connector bus bar 5 is equipped with a device for acoustic and/or visual indication of the discharge of the portable rechargeable battery 2. This device is not the same as the device for acoustic and/or visual indication of the discharge of the stationary traction battery 1, which is a standard part of series-produced electric vehicle.

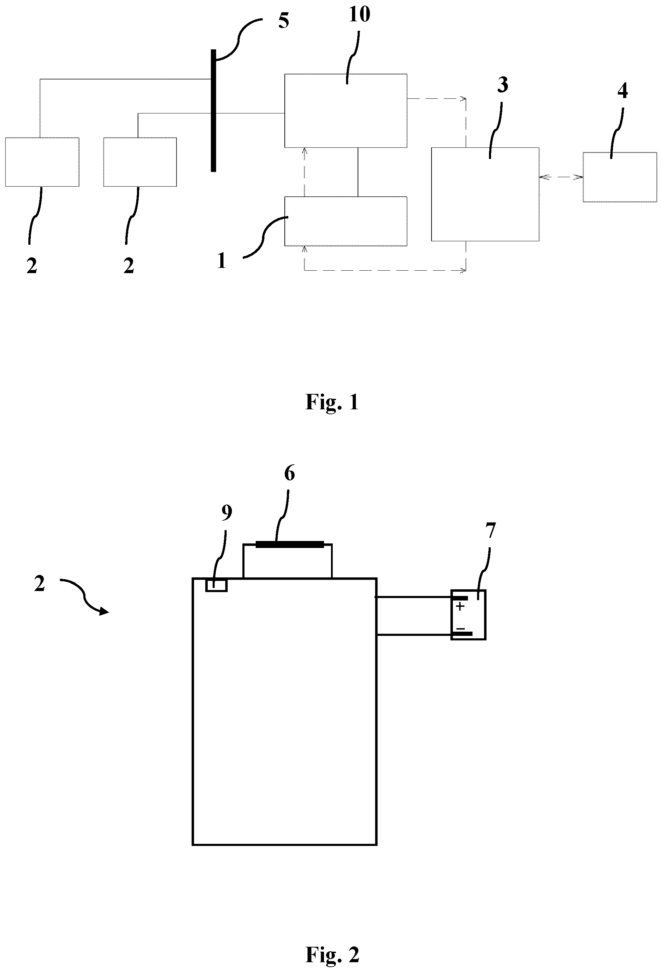

According to a specific embodiment of the invention, shown in Fig. 2 and 3, the portable rechargeable battery 2 is provided with a handle 6 for transporting the portable rechargeable battery 2 to and from the electric vehicle. The size of the portable rechargeable battery 2 thus enables transport of this portable rechargeable battery 2 using human strength, which corresponds to its weight.

According to the same embodiment of the invention, shown in Fig. 2 and 3, the portable rechargeable battery 2 is provided with an external charging connector 8 for connecting the portable rechargeable battery 2 to an external power source not shown.

According to another non-illustrated embodiment of the invention, the electric vehicle is equipped with a non-illustrated holder in the travel or storage space for fixing the position of at least one portable rechargeable battery 2 while driving. According to another non-illustrated embodiment of the invention, the holder is mounted in a removable way. This design enables easy insertion and removal of the portable rechargeable battery in the electric vehicle. A significant advantage is that the holder is mounted in the electric vehicle only when it is decided to use the portable rechargeable battery 2. The holder can then be removed from the electric vehicle. If you do not plan to use the portable rechargeable battery 2, the holder does neither need to be mounted in the electric vehicle, nor will take up unnecessarily space in the electric vehicle. In addition, the holder can be placed anywhere in the electric vehicle, i.e. in the storage space, under the seat and anywhere else. In addition, the size and shape of the holder can be modified according to the capacity requirement, i.e. the size of the portable rechargeable battery 2, and of course also with regard to the easiest possible placement in the vehicle.

### Industrial applicability

The invention finds its application in applications requiring continuous or very long continuous operation of electric vehicles, e.g. operations such as food and item delivery services, logistics, last mile delivery, passenger transport, taxi, car sharing.

### List of reference numerals used in the drawings

- 1: stationary traction battery
- 2: portable rechargeable battery
- 3: battery control, communication and security unit
- 4: central control unit of the electric vehicle
- 5: connector bus bar
- 6: handle
- 7: DC/DC charger
- 8: external charging connector
- 9: storage box
- 10: DC/DC converter

## Claims

1. A method for increasing the range of an electric vehicle powered by a stationary traction battery (1) **characterized in that,** at least one portable rechargeable battery (2) is inserted into the electric vehicle before driving, and then the stationary traction battery (1) is recharged from the portable rechargeable battery (2) of safe voltage while driving by means of a DC/DC charger (7), which is connected to the stationary traction battery (1) and at the same time to a portable rechargeable battery (2), while the DC/DC charger (7) regulates the charging power in time for recharging the stationary traction battery (1) from the portable rechargeable battery (2), depending on the current capacity of the stationary traction battery (1) and the current driving mode of the electric vehicle.

2. The electric vehicle for implementing the method according to claim 1, consisting of at least one stationary traction battery (1) with a battery control, communication and security unit (3), an electrical system for the distribution of electrical energy in the electric vehicle, connected to the stationary traction battery (1) and including sensor devices for sensing the current capacity of the stationary traction battery (1) and the values of current flows of electrical energy in the electrical system of the electric vehicle, while these sensor devices are connected to the battery control communication and security unit (3), and further consisting of a central control unit (4), data and electrically connected to the battery control, communication and security unit (3) **characterized in that,** further consisting of at least one portable rechargeable battery (2) and a DC/DC charger (7) to which the portable rechargeable battery (2) of safe voltage and a stationary traction battery (1) are connected, while the DC/DC charger (7) is connected to the battery control, communication and security unit (3) and is equipped with or connected to a device for instantaneous regulation of the charging power for recharging the stationary traction battery (1) from the portable rechargeable battery (2) while the electric vehicle is driving, depending on the current state of charge of the stationary traction battery (1) and on the current power drawn from the stationary traction battery (1) while driving.

3. The electric vehicle according to claim 2 **characterized in that,** the portable rechargeable battery (2) is placed in the travel or storage space of the electric vehicle.

4. The electric vehicle according to claim 2 or 3 **characterized in that,** the portable rechargeable battery (2) consists of at least two separate battery modules adapted for interconnection into one compact unit, with the separate battery modules being electrically interconnected by means of a connecting device.

5. The electric vehicle according to claim 4 **characterized in that,** the connecting device is a connector bus bar (5).

6. The electric vehicle according to claim 5 **characterized in that,** the connector bus bar (5) is equipped with a device for acoustic and/or visual indication of the discharge of the portable rechargeable battery (2).

7. The electric vehicle according to any of claims 1 to 6 **characterized in that,** the portable rechargeable battery (2) is provided with a handle (6) for transport.

8. The electric vehicle according to any of claims 1 to 7 **characterized in that,** the portable rechargeable battery (2) is provided with an external charging connector (8) for connecting the portable rechargeable battery (2) to an external power source.

9. The electric vehicle according to claims 2 and 3 **characterized in that**, the travel or storage space is equipped with a holder for fixing the position of at least one portable rechargeable battery (2) while driving.

10. The electric vehicle according to claim 9 **characterized in that,** the holder is mounted in the electric vehicle in a removable way.
